(19) Europäisches Patentamt
European Patent Office
Office européen des brevets

(11) **EP 2 107 710 A1**

(12) **EUROPEAN PATENT APPLICATION**

(43) Date of publication:
**07.10.2009 Bulletin 2009/41**

(51) Int Cl.:
*H04L 5/02* (2006.01)   *H04B 1/707* (2006.01)
*H04L 27/26* (2006.01)   *H04J 11/00* (2006.01)

(21) Application number: **08300167.7**

(22) Date of filing: **31.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: FRANCE TELECOM
75015 Paris (FR)

(72) Inventors:
• **Nakano, Asako**
  **75015, Paris (FR)**
• **Bocquet, Wladimir**
  **75015, Paris (FR)**

(74) Representative: **Cabinet Plasseraud**
**52, rue de la Victoire**
**75440 Paris Cedex 09 (FR)**

(54) **Dynamic resource assignment method and related module and devices**

(57)    Method for assigning to users codes associated with respective sub-carriers of at least one group of sub-carriers of a channel, by associating with said codes symbols intended to said users and stored in buffers corresponding respectively to said users. The method comprises, in relation to any of the at least one group of sub-carriers : first assigning the codes associated with the sub-carriers of said group of sub-carriers to the users whose corresponding buffer is not empty, at the rate of one code per user, depending on priority levels and bit error rates respectively calculated for the users ; and then when not all the codes associated with the sub-carriers of said group of sub-carriers have been assigned, assigning the non assigned codes to at least one of the users whose corresponding buffer is not empty, depending on at least some of said priority levels and bit error rates.

FIG. 4

**Description**

The present invention relates to dynamic resource assignment.

Resource assignment is a concern in many communication systems in which bandwidth is a rare commodity. It is the case in radiocommunication systems especially.

The radio bandwidth has already been partitioned in the time (e.g. TDMA, "Time Division Multiple Access"), frequency (e.g. FDMA, "Frequency Division Multiple Access") and even code (e.g. CDMA, "Code Division Multiple Access") domains.

Now, new combinations of different access techniques are being studied. As a non limiting example, MC-CDMA ("Multiple Carrier - Code Division Multiple Access") has been defined and is a serious candidate for future systems, in particular for B3G ("Beyond 3rd Generation") downlink transmissions.

MC-CDMA can be seen as a combination of CDMA and OFDM ("Orthogonal Frequency Division Multiplexing"), as it divides the radio bandwidth in the frequency, code and time domains simultaneously.

In MC-CDMA, symbols are mapped on sub-carriers, i.e. different frequencies each defining flat-faded sub-channels, organized in groups. The symbols mapped on sub-carriers are each spread by use of spreading codes associated with said sub-carriers. The signal resulting from a combination of all the mapped symbols can then be transmitted over the air.

Recently, there have been efforts to adapt the communication to users' needs. In particular, variable parameters, rather than a fixed configuration, have been proposed, in order to achieve the best performance-effort ratio.

When looking at the MC-CDMA technique for example, it comes that the majority of bit errors occur on severely degraded sub-carriers, and this tends to dictate the overall bit error rate (BER) performance.

As a result, eliminating transmission or using more robust modulations on severely degraded sub-carriers can considerably improve the BER performance of the system. Also, higher-order modulations can be used on favorable sub-carriers to increase the throughput.

An interesting dynamic resource assignment solution was suggested in the article « Adaptive Resource Management for a MC-CDMA System with Mixed QoS Classes Using a Cross Layer Strategy », by 1. Gutierrez, F. Bader, J. L. Pijoan, S. Ben Slimane, published in IEEE 65th Vehicular Technology Conference (VTC-SPring) in April 2007.

This solution follows a cross-layered strategy for handling various quality-of-service (QoS) requirements of users in the same cell. The system is divided into two blocks, for the processing performed one over the medium access (MAC) layer, the other at the physical (PHY) layer. The first block assigns priorities to the users, while the second one selects a sub-carriers assignment configuration that matches the users' QoS requirements, to assign them the resources they need.

The MAC layer block monitors the queue of data that has been created for each user, e.g. its size and the number of bits it currently contains, to know the state of each user's transmission and to prevent the system from overflows or useless assignments (when a queue is empty).

It also takes into account the class of service (CoS) that each user requests. There are at least two classes of services, and usually four, associated with different levels of QoS: Real Time (RT), (non Real Time) nRT, etc. According to these two parameters, each user is assigned a priority level on each parallel packet. The decision is made on a frame-by-frame basis.

The k-th user's priority level $PL_i^{(k)}$ for the current frame i is calculated as follows:

$$\text{if } (L_i > 0) \text{ then}\{$$

$$\Delta_{PL} = sign(\hat{T}_i^{(k)} - T_{CoS}^{(k)})$$
$$PL_i^{(k)} = PL_{i-1}^{(k)} + K_1 \cdot \Delta_{PL}$$

$$PL_i^{(k)} = \max\left(\min\left(PL_i^{(k)}, PL_{\max}\right), 1\right)$$

$$\text{if } (L_{CoS} \geq K_2 \cdot (L_{\max} - L_i)) \text{ then }\{$$

$$PL_i^{(k)} = PL_{\max}$$

}

}else {

$$PL_i^{(k)} = 0$$

}

where $L_i$ is the buffer occupancy (number of bits stored in the buffer), $PL_{\max}$ is the number of priority levels, $L_{\max}$ is the buffer size, $\Delta_{PL}$ is the satisfaction measure (which reflects the achievement of the QoS objectives), and $K_1$ and $K_2$ are real constant values to be tuned to obtain fast system response and low buffer overflow possibility.

$T_{CoS}^{(k)}$ is the maximum allowed delay application, $T_i^{(k)}$ the expected delay, and $L_{CoS}$ represents the maximum number of bits per frame that each class is able to generate.

The optimum number of bits that can be transmitted without exceeding a certain BER can be calculated by the following formula:

$$b_{q,(k)} \approx \left\lfloor \log_2 \left( 1 - \frac{1.6 \cdot P_T \cdot |H_{eff}|^2_{q,(k)}}{\ln\left(BER_{q-MQAM} / 0.2\right) \cdot N} \right) \right\rfloor$$

where $b_{q,(k)}$ is the optimum number of bits per symbol that can be loaded on the sub-carriers of the k-th user within the q-th group and assuring a certain upper-bounded BER using a M-QAM modulation.

Given the bit loading estimation available for each parallel packet, the MAC layer can then decide whether to transmit one user's data on a given group of sub-carriers, or not. The users are ordered for each parallel packet according to their priority level, and then according to their bit loading rates, so that only the users who have the best performance can send their data.

A problem with this dynamic resource assignment is that it assigns spreading codes associated with the sub-carriers of each group of sub-carriers, at the rate of only one code per user. This means that when the spreading factor, i.e. the number of spreading codes (and also of sub-carriers) in each group is higher than the number of users whose corresponding buffer is not empty, some of the codes are not assigned.

This leads to overflow for the users whose corresponding buffer is not empty and to a waste of bandwidth.

The present invention proposes a dynamic resource assignment method which limits this disadvantage.

The invention proposes a method for assigning to users codes associated with respective sub-carriers of at least one group of sub-carriers of a channel, by associating with said codes symbols intended to said users and stored in buffers corresponding respectively to said users, the codes and sub-carriers being arranged so that the symbols can be organized in a signal capable of being transmitted over the air.

The method comprises, in relation to any of the at least one group of sub-carriers :

/a/ first assigning the codes associated with the sub-carriers of said group of sub-carriers to the users whose corresponding buffer is not empty, at the rate of one code per user, depending on priority levels and bit error rates respectively calculated for the users ; and then

/b/ when not all the codes associated with the sub-carriers of said group of sub-carriers have been assigned, assigning the non assigned codes to at least one of the users whose corresponding buffer is not empty, depending on at least some of said priority levels and bit error rates.

With this method, capacity loss is avoided because the codes not assigned in /a/ are assigned to already assigned users in /b/. Overflow is thus limited.

Also, useless assignments are prevented since only users whose corresponding buffer is not empty are assigned codes.

As a result, the bandwidth of the system is used more efficiently.

Advantageously, assignment can be achieved by giving priority to users having a maximum priority level or a bit error rate less than a determined threshold. As an effect, good quality communications are favored, without excluding poor quality communications in case codes remain unassigned. Significant improvements in performance are thus provided. Top priority users are also favored whatever the quality of their communication may be.

The invention also proposes a dynamic resource assignment module for assigning to users codes associated with respective sub-carriers of at least one group of sub-carriers of a channel, by associating with said codes symbols intended to said users and stored in buffers corresponding respectively to said users, the codes and sub-carriers being arranged so that the symbols can be organized in a signal capable of being transmitted over the air.

This module comprises, in relation to any of the at least one group of sub-carriers :

/a/ means for first assigning the codes associated with the sub-carriers of said group of sub-carriers to the users whose corresponding buffer is not empty, at the rate of one code per user, depending on priority levels and bit error rates respectively calculated for the users ; and then

/b/ means for, when not all the codes associated with the sub-carriers of said group of sub-carriers have been assigned, assigning the non assigned codes to at least one of the users whose corresponding buffer is not empty, depending on at least some of said priority levels and bit error rates.

The dynamic resource assignment module can be implemented in hardware, software or a combination thereof.

The invention also proposes a transmitter including the above mentioned dynamic resource assignment module. The transmitter comprises means for transmitting said signal over the air and means for transmitting a signalling channel containing information reflecting the assignment of said codes to users.

The invention also proposes a base station arranged for being part of a radiocommunication system and including the above mentioned transmitter.

The invention also proposes a receiver comprising means for receiving the signalling channel transmitted by the above mentioned transmitter and means arranged for retrieving the symbols assigned to a user of said receiver according to the above mentioned method, by processing the signal transmitted over the air by the transmitter in accordance with the information contained in the signalling channel and reflecting the assignment of said codes to users.

The invention also proposes a mobile terminal capable of receiving signals from a base station of a radiocommunication system, the mobile terminal including a receiver as mentioned above.

The preferred features of the above aspects which are indicated by the dependent claims may be combined as appropriate, and may be combined with any of the above aspects of the invention, as would be apparent to a person skilled in the art.

- FIG.1 shows an exemplary transmission scheme that can be used in accordance with the invention ;

- FIG.2 shows an exemplary reception scheme that can be used in accordance with the invention ;

- FIG.3 schematically shows an exemplary dynamic resource assignment module according to the invention ;

- FIG.4 is a flow chart showing exemplary steps that a dynamic resource assignment module may carry out according to the invention.

The present invention is described below in a MC-CDMA context, although it may be implemented in conjunction with other radio access techniques as well.

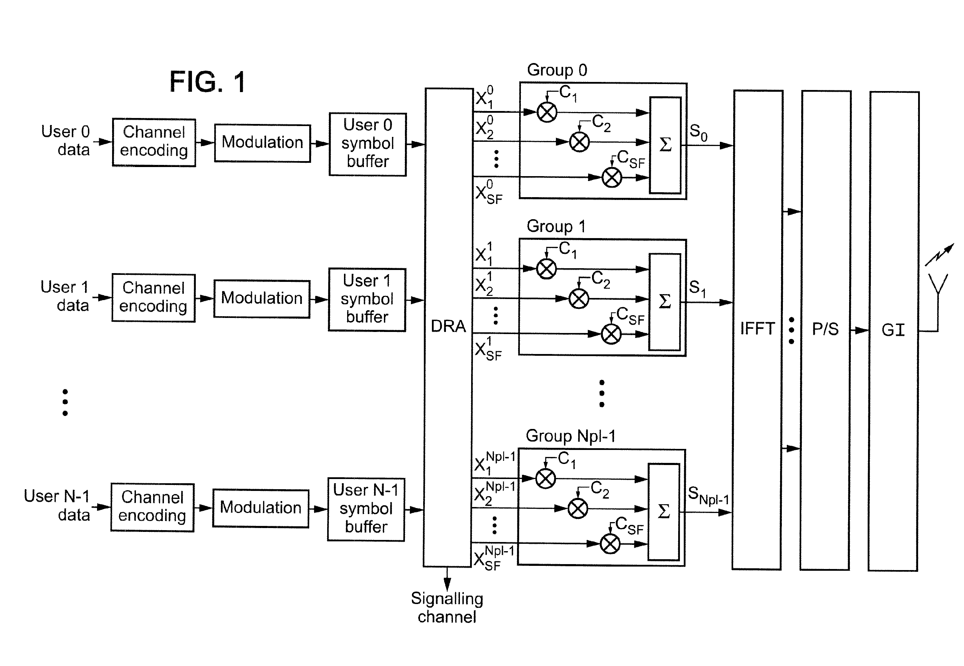

FIG.1 shows a transmission scheme using the MC-CDMA technique and including dynamic resource assignment according to the invention. It may be implemented in a transmitter, for example a base station of a radiocommunication system.

Data intended to N users are inputted into the transmitter. The data of each user are first processed individually. This processing comprises channel-encoding and modulation so as to produce OFDM symbols as well known in the art.

The symbols are then stored in buffers corresponding respectively to the users to which the symbols are intended.

The symbols are then outputted from the buffers and parallelized in order to be associated, e.g. by multiplication, with spreading codes assigned to the users they are intended to, under control of a dynamic resource assignment module (DRA). The operation of the DRA will be detailed further.

A signalling channel may also be built for containing information reflecting the assignment made by the DRA. This signalling channel is sent so that receivers can reattribute the sent symbols to the appropriate users.

There may be SF spreading codes $C_1$, $C_2$, ..., $C_{SF}$, where SF denotes the spreading factor. Each code is orthogonal to any other user's code.

The spreading codes are associated with respective sub-carriers of several groups 0, 1, ..., Npl-1 forming a channel.

Given the number of OFDM symbols in a frame and the number of sub-carriers, respectively noted Npckd_inp and Nc, the resulting spreading sequence for the n-th OFDM symbol (n=0, 1, ..., Npckd_inp-1) in the m-th sub-carrier (m=0, 1, ..., Nc-1) is expressed by:

$$S_{m,n} = X_{m\,mod\,SF+1}^{\lfloor m/SF \rfloor} \times C_{m\,mod\,SF+1}$$

where $X_i^j$ (i=1,2,...,SF and j=0,1,....,Nc/SF) is the data modulated symbol and $C_i$ (i=1,2,...,SF) is the spreading code, $\lfloor z \rfloor$ denotes the greatest integer that does not exceed z.

Put differently, the OFDM symbols $X_i^j$ (i=1,2,...,SF) are respectively associated with the spreading codes associated with the sub-carriers of the group j (j=0, 1, ..., Npl-1). The resulting spreading sequences are then summed to output a sequence Sj of symbols corresponding to the group j.

In practice, each spreading code $C_i$ (i=1,2,...,SF) may be divided into a plurality of sub-codes $c_i^r$ (i=1,2,..., SF) with which the OFDM symbol $X_r^j$ (r=1,2,...SF) is multiplied.

The outputted sequences Sj are then subjected to an Inverse Fast Fourier Transform (IFFT). The result is in the time domain.

A conversion parallel to serial (P/S) is also carried out.

In order to avoid Inter-Symbol Interference (ISI) caused by multipath propagation, a Guard Interval (GI) of Ng points is inserted as well known in the art.

The resulting signal is then sent over the air via an antenna.

During its transmission over the air, the sent signal suffers from channel effects, such as fading or noise.

After passing through the channel, the signal is received by the antennas of receivers held by said users respectively.

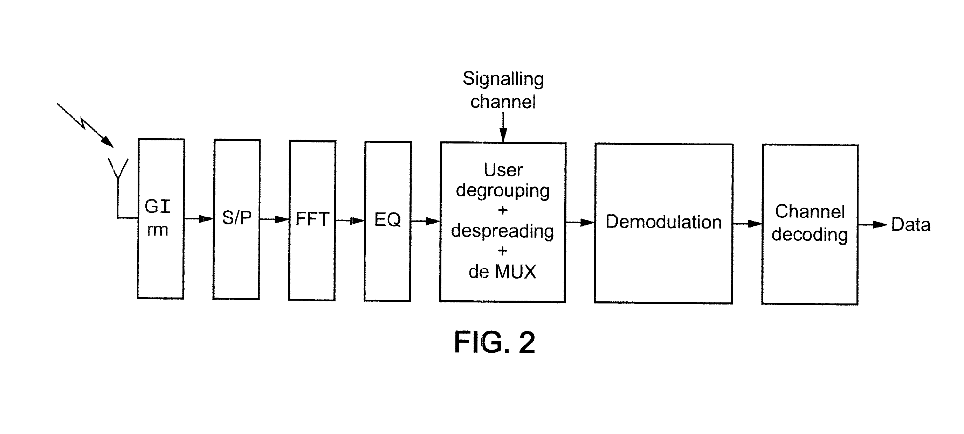

One reception scheme which may be implemented by one receiver held by a given user is shown in FIG.2.

According to this reception scheme, the GI is removed from the received signal, a conversion serial to parallel (S/P) is carried out and a Fast Fourier Transform (FFT) is applied.

The channel effect has to be reversed. Assuming that the propagation channel consists in P discrete paths having different magnitudes and delays, its baseband impulse response can be written as:

$$h(t,\tau) = \sum_{p=0}^{P-1} \alpha_p(t).\delta(\tau - \tau_p)$$

Where $\alpha_p$ and $\tau_p$ are respectively the complex channel gain and the time delay of the p-th discrete path.

In the frequency domain, the channel transfer function is equal to:

$$H^{(k)}(t,f) = \sum_{p=0}^{P-1} \alpha_p^{(k)}(t).\exp\left[-j2\pi f\tau_p\right]$$

The channel estimation for each sub-carrier is measured by the sending of pilots that are multiplexed in the packet frame at every sub-carrier. The result is denoted $\hat{H}_m^{(k)}$.

Equalization (EQ) can then be performed using various combining schemes, such as Equal Gain Combining (EGC), Maximal Ratio Combining (MRC), Minimum Mean Square Error (MMSE), Orthogonal Restoring Combining (ORC), etc., so that the channel distortion is reduced. The compensation scheme on the m-th subcarrier for the k-th user, denoted $G_m^{(k)}$, can be expressed as:

$$G_m^{(k)} = \begin{cases} \dfrac{1}{\hat{H}_m^{(k)}} & \textit{for ORC} \\[2ex] \dfrac{\hat{H}_m^{(k)*}}{\left|\hat{H}_m^{(k)}\right|^2} & \textit{for MRC} \\[2ex] \dfrac{\hat{H}_m^{(k)*}}{\left|\hat{H}_m^{(k)}\right|} & \textit{for EGC} \\[2ex] \dfrac{\hat{H}_m^{(k)*}}{N_u \cdot \left|\hat{H}_m^{(k)}\right|^2 + \sigma_n^2} & \textit{for MMSE} \end{cases}$$

After that step, the symbols are despread, i.e. multiplied by the code of the user which symbol is to be decrypt, and added together. To do so, the signalling channel received from the transmitter is analyzed, so as to reattribute the symbols received to the appropriate users.

The result is then demodulated, channel decoded, to obtain the final, usable data.

All the above steps, apart from the DRA operations, are well known in the art and are typical of a system using the MC-CDMA technique. Of course, the present invention may also apply to variants of those steps. As an example, the DRA module may work on bits, rather than on already modulated symbols.

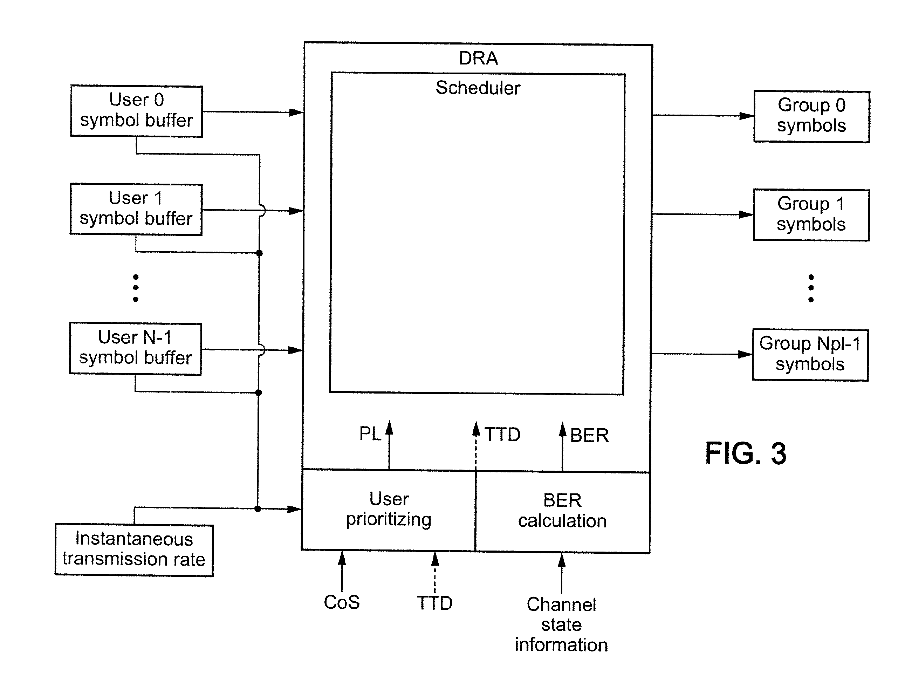

The DRA operations will now be detailed with reference to FIG.3.

The DRA module includes a scheduler that assigns the spreading codes $C_i$ (i=1,2,...,SF) associated with respective sub-carriers of groups 0, 1, ..., Npl-1 to some or all the users 0, 1, ..., N-1.

This is achieved by associating symbols contained in the user buffers with the codes $C_i$ (i=1,2,...,SF), so that the symbols can be multiplied by said codes as explained with reference with FIG.1.

The scheduler works on the basis of one group of sub-carriers at a time, with the associated spreading codes.

As an example, user symbols are first associated with the SF codes $C_i$ (i=1,2,...,SF) in relation to the group 0 of sub-carriers, then user symbols are associated with the SF codes $C_i$ (i=1,2,...,SF) in relation to the group 1 of sub-carriers, and so on until user symbols are finally associated with the SF codes $C_i$ (i=1,2,...,SF) in relation to the group Npl-1 of sub-carriers. And then again, other user symbols are associated with the SF codes $C_i$ (i=1,2,...,SF) in relation to the group 0 of sub-carriers, and so on until all user symbols have been associated with the SF codes $C_i$ (i=1,2,...,SF) in relation to all groups 0, 1, ..., Npl-1 of sub-carriers, in a number Npckd_inp of times that corresponds to the size of a frame.

This number Npckd_inp can also be varied depending on the amount of symbols present in the user symbol buffers. For instance, it can be maximized so as to flow a maximum of symbols in each frame, while being kept below the coherence time (which is the time during which a sub-channel can be considered as stable, and hence a convolution (or FFT/IFFT) can be made).

Of course, the association of symbols and codes may be done differently, especially in a different order.

Like in the system disclosed in the above mentioned article « Adaptive Resource Management for a MC-CDMA System with Mixed QoS Classes Using a Cross Layer Strategy », the DRA of the present invention is divided into two blocks, for the processing performed one over the medium access (MAC) layer, the other at the physical (PHY) layer.

Considering the group j (j=0, 1, ..., Npl-1) of sub-carriers, the DRA calculates a priority level PL for each user 0, 1, ..., N-1.

This calculation takes into account the class of service (CoS) of the user. The CoS involves the parameters that remain fixed during the communication period and may include e.g. the Peak Bit Rate (PBR), the Guaranteed Bit Rate (GBR), the Bit Error Rate (BER), etc.

The calculation of the priority level PL also takes account of the instantaneous transmission rate as well as the occupancy of the corresponding user symbol buffer.

Optionally, the priority level PL may also take into account a Time To Deadline (TTD) associated with symbols stored in the corresponding user symbol buffer. The TTD associated with a symbol, as known in the art, relates to the maximum allowed delay time within which this symbol should be transmitted.

In this way, a high priority level may be assigned to a user to whom symbols with a low TTD are intended. In other words, if a symbol is about to be timed-out without any hope for better channel conditions, the PL of the corresponding user may be increased to the maximum so that this symbol is sent within the current frame, and even within the current group of sub-carriers. Even though the channel conditions were not the best, the symbol has been sent on time, and the previous and next symbol can help providing better quality for that user. This TTD may bring fairness among users.

The calculation of all the priority levels PL for all the users 0, 1, ..., N-1 constitutes a user prioritizing that is submitted to the scheduler of the DRA.

Still considering the group j (j=0, 1, ..., Npl-1) of sub-carriers, the DRA further calculates a bit error rate BER for each user 0, 1, ..., N-1, based on channel state information, i.e. a channel estimation.

Such calculation is relatively simple. In particular, it requires much less processing than the quantity $b_{q,(k)}$ used for the bit loading disclosed in the above mentioned article « Adaptive Resource Management for a MC-CDMA System with Mixed QoS Classes Using a Cross Layer Strategy)».

The resulting BER values for all the users 0, 1, ..., N-1 are also submitted to the scheduler of the DRA.

Note that Signal to Noise Ratio (SNR) may be used in addition to or instead of BER. Other similar parameters may be suitable as well.

The scheduler takes account of the obtained PL and BER to assign to the users the spreading codes $C_i$ (i=1,2,..., SF) associated with the sub-carriers of the group j considered.

There are many ways the assignment of the codes may depend on the obtained PL and BER. For example, PL may be considered first so as to assign users with the highest PL, while BER may be considered only when different users have the same PL so as to assign users with the lowest BER. Of course, any other possibility would be suitable as well.

The scheduler may also take account of other parameters. As an example, the TTD of a symbol may be considered directly in the scheduler, in particular when it has not been used in the PL calculation. In this case, the assignment may be performed by considering the TTD before the PL and BER, although other possibilities would be suitable as well.

Note that the DRA features may be implemented in a module, which may be a hardware device, a computer program product loaded and run on computer means, e.g. of a transmitter, such as a base station of a radiocommunication system. It may also be a combination of such hardware device and computer program.

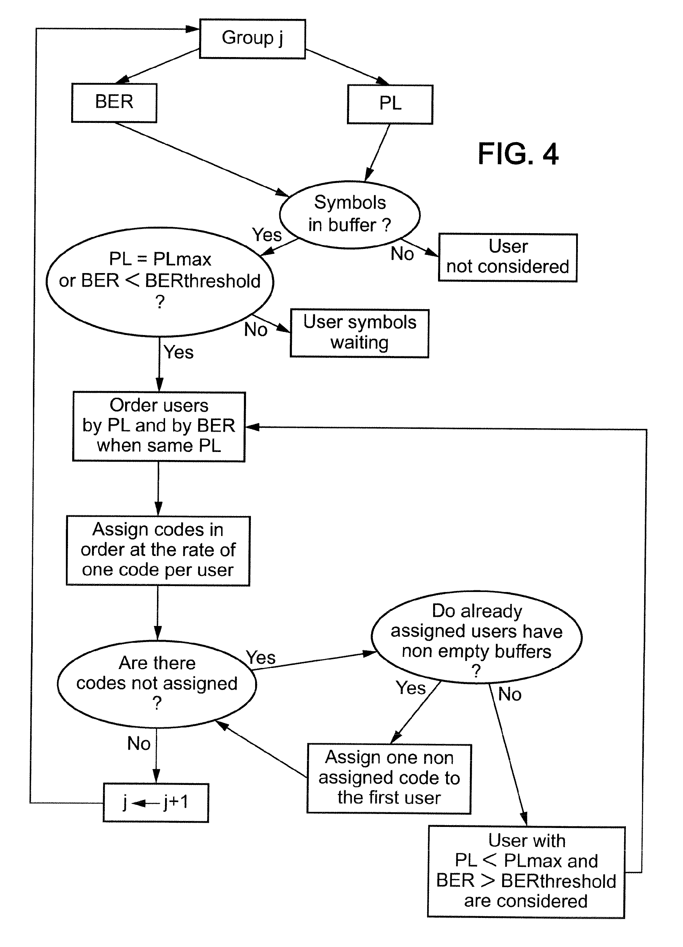

FIG.4 shows a non limiting example of assignment that the DRA of FIG.3 may implement. Of course, many variants could be envisaged within the framework of the present invention.

In this example, the group j (j=0, 1, ..., Npl-1) of sub-carriers is considered currently. If j>1, that means that symbols have already been associated with spreading codes $C_i$ (i=1,2,...,SF) associated with the sub-carriers of other groups.

BER and PL have been calculated in relation to the group j (j=0, 1, ..., Npl-1) of sub-carriers as explained with reference to FIG.3.

A distinction is made between the users among users 0, 1, ..., N-1 whose corresponding buffer contains one or several symbols and the users among users 0, 1, ..., N-1 whose corresponding buffer is empty.

Only the first category of users is considered. This prevents the scheduler from useless assignments, by reserving codes for users whose corresponding buffer is empty and thus no symbol is intended to.

For each one of those users, it may advantageously be checked whether their PL is maximum, i.e. equals the maximum PL (PLmax), or whether their BER is less than a determined threshold (BERthreshold).

Note that BERthreshold may be changed in time. It may also differ between the users depending on their PL. For example, two BERthreshold values may be set (a lower limit and an upper limit), so that criterion is strong for low priority levels, but when there is an emergency of transmitting (maximum priority level), the criterion can be less-constraining.

The users which do not satisfy the above mentioned conditions, i.e. for whom PL<PLmax and BER>BERthreshold, are not considered at this stage. The symbols intended to those users wait in the buffers in which they are stored.

Considering only the other users, i.e. the users satisfying the conditions PL=PLmax or BER<BERthreshold, at this stage enables to assign codes in priority to users who will get a good quality of communication in terms of BER. Users with maximum priority level are nevertheless not discarded, even if their BER is higher than BERthreshold.

Those users, i.e. the users satisfying the conditions PL=PLmax or BER<BERthreshold, are ordered depending on their respective PL and BER.

If, however, the conditions PL=PLmax or BER<BERthreshold have not been checked, all the users whose corresponding buffer is not empty may be ordered depending on their PL and BER.

In the example illustrated in FIG.4, the users are ordered by PL, and by BER for users having the same PL. A classification list of users can thus be built, in descending order of their respective PL and, when PL are the same, in ascending order of their respective BER.

The codes associated with respective sub-carriers of the group j are assigned to users in order, that is from top to bottom of the classification list, at the rate of one code per user. As mentioned above, only users whose corresponding buffer is not empty are considered to avoid useless assignments.

When all the codes associated with respective sub-carriers of the group j have been assigned, the next group j+1 of sub-carriers is then considered and the same steps are carried out in relation to this next group.

If the group j was the last group of sub-carriers, i.e. j=Npl-1, the first group 0 is considered again, unless it has already been considered Npckd_inp times, which means that the frame is complete.

As mentioned above, the number Npckd_inp can also be varied, for example to maximize the number of symbols delivered in each frame, while staying below its coherence time.

As the calculated BERs may vary from one group of sub-carriers to the following group of sub-carriers (i.e. between two successive parallel packets), the order of the users in the classification list may also change. In this way, it is possible to have a number of users assigned in a frame which is higher than the number SF of codes associated with the sub-carriers of each group. Overloading is thus enabled.

Otherwise, when not all the codes associated with the sub-carriers of the group j have been assigned, it is checked whether already assigned users have non empty buffers.

When there is one or several already assigned users whose corresponding buffer is not empty, the non assigned codes are assigned to those users. This assignment also takes account of at least some of the PL and BER of those users.

In the illustrated example, one non assigned code is assigned to the first user in the above mentioned classification list. This operation can be repeated as long as the buffer of this first user is non empty or there is no more non assigned code associated with the sub-carriers of the group j.

Alternatively, the non assigned codes may be assigned to several already assigned users having non empty buffers, for example at the rate of one code per user in the order defined in the above mentioned classification list. Other possibilities would be suitable as well.

Due to this new assignment of already assigned users, symbols can be associated with codes as long as non assigned codes remain. The sent frames are thus better filled and overflow is further limited.

If, by contrast, all buffers corresponding to already assigned users are empty, the users for whom PL<PLmax and BER>BERthreshold may advantageously be considered at this stage (if not considered before).

Those users may thus be ordered by PL, and by BER for users having the same PL. Then the scheduling can go on in the same way as explained above.

In particular, codes may be assigned by taking account of this order. This assignment can take place at the rate of one code per user or of as many remaining codes as necessary to empty the buffer of a considered user for example.

In this way, it is taken benefit from the remaining codes for users whose quality of communication will be not as good in terms of BER and whose priority level is not as high as for the users assigned initially. Overflow is thus limited even for those users and the bandwidth of the system is used more efficiently.

The above described dynamic resource assignment can be described as a two-part mechanism including users' prioritizing first and then active users' assignment.

Users' prioritizing can be described as follows, using the same notations as mentioned above with reference to the article « Adaptive Resource Management for a MC-CDMA System with Mixed QoS Classes Using a Cross Layer Strategy » :

$$\text{if } ( L_i > 0 ) \text{ then}\{$$

$$\Delta_{PL} = sign(\hat{T}_i^{(k)} - T_{CoS}^{(k)})$$
$$PL_i^{(j,k)} = PL_{i-1}^{(j,k)} + K_1 \cdot \Delta_{PL}$$

$$PL_i^{(j,k)} = \max\,(\min\,(PL_i^{(j,k)}, PL_{\max}),1)$$

$$\text{if } ( L_{CoS} \geq K_2 \cdot (L_{\max} - L_i) ) \text{ then } \{$$

$$PL_i^{(j,k)} = PL_{\max}$$

$$\}$$

$$\}\text{else } \{$$

$$PL_i^{(j,k)} = 0$$

$$\}$$

And the active users' assignment may be described as the two following loops :

**1st loop**

$$\text{if } ( L_i > 0 ) \text{ then}\{$$

index=number of users already assigned in group j

first_index=index

if (index=0) then {

$$AU_0^{(j,k)} = i$$

$L_i --$

```
    }else{

#classification by priority#

    while (index>0 &&
```
$PL^{(j,k)}_{AU^{(j,k)}_{index-1}} < PL^{(j,k)}_i$
```
    ){

        if (index<SF) then{
```
$$AU^{(j,k)}_{index} = AU^{(j,k)}_{index-1}$$
```
        } else {
```
$L_{AU^{(j,k)}_{index-1}} ++$
```
        }
```
$$AU^{(j,k)}_{index-1} = i$$
```
        index--

    }

#if same priority, comparison of SNR (or BER)#

    while (index>0 &&
```
$PL^{(j,k)}_{AU^{(j,k)}_{index-1}} = PL^{(j,k)}_i$ && $SNR^{(j)}_{AU^{(j,k)}_{index-1}} < SNR^{(j)}_i$
```
    ){

        if (index<SF) then {
```
$$AU^{(j,k)}_{index} = AU^{(j,k)}_{index-1}$$
```
        } else {
```
$L_{AU^{(j,k)}_{index-1}} ++$
```
        }
```
$$AU^{(j,k)}_{index-1} = i$$
```
        index--

    }

#the user has not been assigned yet#

    if(first_index>index) then{
```

$$L_i --$$

}

if(first_index=index && index<SF) then {

$$AU^{(j,k)}_{index} = i$$

$$L_i --$$

}

}

}

}

**2nd loop**

#In order to avoid capacity loss in each group, we assign as many users as possible#

one_time=number of users already assigned in group j

if(one_time>0&&one_time<SF) then {

index=one_time;

while(index<SF){

non_empty=0;

while ( $L_{AU_{non\_empty}^{(j,k)}} = 0$ && non_empty<one_time){

non_empty++

}

if (non_empty<one_time) then {

$$AU_{index}^{(j,k)} = AU_{non\_empty}^{(j,k)}$$

$$L_{AU_{non\_empty}^{(j,k)}} \; --$$

} else{

$$AU_{index}^{(j,k)} = -1$$

}

index++

}

}

where $AU_i^{(j,k)}$ is the user assigned for the symbol k ($k \in$ {0, *Npckd_inp*-1}), in the group j (j=0, 1,..., Npl-1), for the i-th spreading code (i=1,2,...,SF), and $SNR_i^{(j)}$ is the SNR subjected to the user l (l=0, 1, ..., N-1) in the group j.

When adding the optional features derived from the use of one or several BER thresholds (hereafter BER_{authorized}), as explained with reference to FIG.4, the active users' assignment can be modified as follows (while the users' prioritizing remain unchanged) :

**1st loop**

if ( $L_i > 0$ &&( $PL_i^{(j,k)} = PL_{\max}$ || $BER_i^{(j)} < BER_{authorized}$ )) then{

    index=number of users already assigned in group j

    first_index=index

    if (index=0) then {

        $AU_0^{(j,k)} = i$

$L_i --$

    }else{

#classification by priority#

    while (index>0 && $PL_{AU_{index-1}^{(j,k)}}^{(j,k)} < PL_i^{(j,k)}$ ){

        if (index<SF) then {

            $AU_{index}^{(j,k)} = AU_{index-1}^{(j,k)}$

        } else{

$$L_{AU^{(j,k)}_{index-1}} + +$$

$$\}$$

$$AU^{(j,k)}_{index-1} = i$$

index--

$$\}$$

#if same priority, comparison of SNR (or BER)#

while (index>0 && $PL^{(j,k)}_{AU^{(j,k)}_{index-1}} = PL^{(j,k)}_i$ && $SNR^{(j)}_{AU^{(j,k)}_{index-1}} < SNR^{(j)}_i$ ){

if (index<SF) then {

$$AU^{(j,k)}_{index} = AU^{(j,k)}_{index-1}$$

} else {

$$L_{AU^{(j,k)}_{index-1}} + +$$

$$\}$$

$$AU^{(j,k)}_{index-1} = i$$

index--

$$\}$$

#the user has not been assigned yet#

if(first_index>index) then {

$$L_i - -$$

$$\}$$

if(first_index=index && index<SF){

$$AU^{(j,k)}_{index} = i$$

$$L_i - -$$

$$\}$$

$$\}$$

}

**2nd loop**

#In order to avoid capacity loss in each group, we assign as many users as possible#

one_time=number of users already assigned in Group j

if(one_time>0&&one_time<SF) then {

index=one_time;

while(index<SF){

non_empty=0

while ( $L_{AU^{(j,k)}_{non\_empty}} = 0$ && non_empty<one_time){

non_empty++

}

if (non_empty<one_time) then {

$$AU^{(j,k)}_{index} = AU^{(j,k)}_{non\_empty}$$

$$L_{AU^{(j,k)}_{non\_empty}} --$$

}else{

**3rd loop**

#if no user used in this group has any data left, it must go on other users, whose BER is superior#

u= -1

for (non_empty=0;non_empty<USR;non_empty++){

if ( $L_{non\_empty} > 0$ ) then {

if((u=-1)||( $SNR^{(j)}_{non\_empty} < SNR^{(j)}_u$ )) then {

u=non_empty

}

}

}

$AU^{(j,k)}_{index} = u$

if(u!=-1) then {

$L_u --$

}

}

index++

}

}else{

index=0

if(one_time=0) then {

**4<sup>th</sup> loop**

\# no user assigned in the group\#

for (non_empty=0;non_empty<USR;non_empty++){

index= number of users already assigned in Group j

first_index=index

if ( $L_{non\_empty} > 0$ ) then {

if (index=0) then {

$$AU_0^{(j,k)} = non\_empty$$

$$L_{non\_empty} --$$

}else{

#classification by priority#

while (index>0 && $PL^{(j,k)}_{AU^{(j,k)}_{index-1}} < PL^{(j,k)}_{non\_empty}$ ) {

    if (index<SF) then {

$$AU^{(j,k)}_{index} = AU^{(j,k)}_{index-1}$$

    } else {

$$L_{AU^{(j,k)}_{index-1}} + +$$

    }

$$AU^{(j,k)}_{index-1} = non\_empty$$

    index--

}

#if same priority, comparison of SNR (or BER)#

while (index>0 && $PL^{(j,k)}_{AU^{(j,k)}_{index-1}} = PL^{(j,k)}_{non\_empty}$ && $SNR^{(j)}_{AU^{(j,k)}_{index-1}} < SNR^{(j)}_{non\_empty}$ ){

    if (index<SF) then {

$$AU^{(j,k)}_{index} = AU^{(j,k)}_{index-1}$$

    } else {

$$L_{AU^{(j,k)}_{index-1}} + +$$

    }

$$AU^{(j,k)}_{index-1} = non\_empty$$

    index--

}

if(firstindex>index) then {

$$L_{non\_empty} - -$$

}

if(firstindex=index && index<SF) then {

$$AU_{index}^{(j,k)} = non\_empty$$

$$L_{non\_empty} --$$

            }

          }

        }

        }

**5th loop**

$$AU_{index}^{(j,k)} = non\_empty$$

#users are classified by PL and SNR (or BER), we should then assign them to fill all SF#

ones= number of users already assigned in group j

if(ones>0&&ones<SF) then {

   finger=ones

   while(finger<SF){

    cursor=0

    while ( $L_{AU_{cursor}^{(j,k)}} = 0$ && cursor<ones) {

    cursor++

    }

    if (cursor<ones) then {

$$AU_{finger}^{(j,k)} = AU_{cursor}^{(j,k)}$$

$$L_{AU_{cursor}^{(j,k)}} --$$

    } else{

$$AU_{finger}^{(j,k)} = -1$$

    }

    finger++

    }

   }

  }

 }

where $BER_i^{(j)}$ is the BER subjected to the i-th user on the parallel packet j, and $BER_{authorized}$ is the BER threshold above which the data are not transmitted when the user is not at the maximum priority level. All data are sent within each frame.

After the assignment described above has taken place, the buffers are discharged of the symbols associated with codes, and the TTD of the remaining symbols may be updated. Transmission of the symbols can then be applied as explained with reference to FIG.1.

The signalling channel built from the DRA operations carries information on how the symbols intended to the different users have been associated with the spreading codes.

On reception of a sequence sent according to the transmission scheme of FIG.1, a receiver can analyze the signalling channel received from the transmitter and use its information for user degrouping, despreading and deMUX in a way corresponding to the DRA operations.

Each receiver can thus receive only the symbols but all the symbols that are intended to its user.

Note that retrieving the appropriate symbols in the receiver may be carried out partly or entirely by an appropriate module, which may be a hardware device or a computer program product loaded and run on computer means, e.g. of a mobile terminal capable of receiving signals transmitted from a base station of a radiocommunication system. It may also be a combination of such hardware device and computer program.

**Claims**

1. A method for assigning to users codes associated with respective sub-carriers of at least one group of sub-carriers of a channel, by associating with said codes symbols intended to said users and stored in buffers corresponding respectively to said users, the codes and sub-carriers being arranged so that the symbols can be organized in a signal capable of being transmitted over the air,
the method comprising, in relation to any of the at least one group of sub-carriers :

   /a/ first assigning the codes associated with the sub-carriers of said group of sub-carriers to the users whose corresponding buffer is not empty, at the rate of one code per user, depending on priority levels and bit error rates respectively calculated for the users ; and then
   /b/ when not all the codes associated with the sub-carriers of said group of sub-carriers have been assigned, assigning the non assigned codes to at least one of the users whose corresponding buffer is not empty, depending on at least some of said priority levels and bit error rates.

2. A method as claimed in claim 1, wherein codes are first assigned only to users having a maximum priority level or a bit error rate less than a determined threshold, and wherein, when not all the codes associated with the sub-carriers of said group of sub-carriers have been assigned after /b/, assigning the non assigned codes to at least one of the users whose corresponding buffer is not empty and having a priority level under the maximum priority level and a bit error rate higher than the determined threshold.

3. A method as claimed in claim 1, wherein, in /a/, codes are first assigned to users in descending order of their respective priority levels and, when priority levels are the same, in ascending order of their respective bit error rates.

4. A method as claimed in claim 1, wherein, in /b/, the non assigned codes are assigned to the user having the higher priority level or, when several users have the same priority level, the lower bit error rate, as long as the corresponding buffer is not empty.

5. A method as claimed in claim 1, wherein assigning codes associated with the sub-carriers of said group of sub-carriers in /a/ and/or /b/ further depends on times to deadline respectively associated with the symbols stored in the buffers.

6. A method as claimed in claim 5, wherein the times to deadline are taken into account in calculating the priority levels.

7. A dynamic resource assignment module for assigning to users codes associated with respective sub-carriers of at least one group of sub-carriers of a channel, by associating with said codes symbols intended to said users and stored in buffers corresponding respectively to said users, the codes and sub-carriers being arranged so that the symbols can be organized in a signal capable of being transmitted over the air,
the module comprising, in relation to any of the at least one group of sub-carriers :

   /a/ means for first assigning the codes associated with the sub-carriers of said group of sub-carriers to the users whose corresponding buffer is not empty, at the rate of one code per user, depending on priority levels and bit error rates respectively calculated for the users ; and then
   /b/ means for, when not all the codes associated with the sub-carriers of said group of sub-carriers have been assigned, assigning the non assigned codes to at least one of the users whose corresponding buffer is not empty, depending on at least some of said priority levels and bit error rates.

8. A transmitter including a dynamic resource assignment module as claimed in claim 7, the transmitter comprising means for transmitting said signal over the air and means for transmitting a signalling channel containing information reflecting the assignment of said codes to users.

9. A base station arranged for being part of a radiocommunication system and including a transmitter as claimed in claim 8.

10. A receiver comprising means for receiving the signalling channel transmitted by a transmitter as claimed in claim 8 and means arranged for retrieving the symbols assigned to a user of said receiver according to the method as claimed in claim 1, by processing the signal transmitted over the air by the transmitter in accordance with the information contained in the signalling channel and reflecting the assignment of said codes to users.

11. A mobile terminal capable of receiving signals from a base station of a radiocommunication system, the mobile terminal including a receiver as claimed in claim 10.

12. A computer program product comprising code instructions for, when loaded and run on computer means, carrying out the method as claimed in any one of claims 1 to 6.

FIG. 1

**FIG. 2**

FIG. 3

# FIG. 4

Group j

BER

PL

Symbols in buffer ?

Yes

No → User not considered

PL = PLmax or BER < BERthreshold ?

No → User symbols waiting

Yes

Order users by PL and by BER when same PL

Assign codes in order at the rate of one code per user

Are there codes not assigned ?

Yes → Do already assigned users have non empty buffers ?

Yes → Assign one non assigned code to the first user

No → User with PL < PLmax and BER > BERthreshold are considered

No

j ← j+1

Europäisches
Patentamt

European
Patent Office

Office européen
des brevets

# EUROPEAN SEARCH REPORT

**Application Number**

EP 08 30 0167

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUTIERREZ I ET AL: "Adaptive Resource Management for a MC-CDMA System with Mixed QoS Classes Using a Cross Layer Strategy" VEHICULAR TECHNOLOGY CONFERENCE, 2007. VTC2007-SPRING. IEEE 65TH, IEEE, PI, 1 April 2007 (2007-04-01), pages 3036-3040, XP031093188 ISBN: 978-1-4244-0266-3 * I. Introduction * * II. System model * * III. Dynamic resource allocation under QoS restrictions * * figs. 1, 2 * * abstract * | 1-12 | INV. H04L5/02 H04B1/707 ADD. H04L27/26 H04J11/00 |
| A | US 2006/171424 A1 (CHOI HOKYU [GB]) 3 August 2006 (2006-08-03) * abstract * * paragraph [0006] - paragraph [0010] * * paragraph [0026] - paragraph [0035] * * paragraph [0044] - paragraph [0048] * | 1-12 | |
| | | | **TECHNICAL FIELDS SEARCHED (IPC)** |
| A | TABULO M ET AL: "A linear programming algorithm for a grouped MC-CDMA system" VEHICULAR TECHNOLOGY CONFERENCE, 2003. VTC 2003-FALL. 2003 IEEE 58TH ORLANDO, FL, USA 6-9 OCT. 2003; [IEEE VEHICULAR TECHNOLGY CONFERENCE], PISCATAWAY, NJ, USA,IEEE, US, vol. 3, 6 October 2003 (2003-10-06), pages 1463-1467, XP010702545 ISBN: 978-0-7803-7954-1 * abstract * * I. Introduction * * II. System model * * III. Grouping and subcarrier allocation* | 1-12 | H04L H04B |

The present search report has been drawn up for all claims

| Place of search | Date of completion of the search | Examiner |
|---|---|---|
| Munich | 17 November 2008 | Palacián Lisa, Marta |

EPO FORM 1503 03.82 (P04C01)

## ANNEX TO THE EUROPEAN SEARCH REPORT
## ON EUROPEAN PATENT APPLICATION NO.

EP 08 30 0167

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2008

| Patent document cited in search report | Publication date | Patent family member(s) | Publication date |
|---|---|---|---|
| US 2006171424 A1 | 03-08-2006 | GB 2421880 A | 05-07-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **Gutierrez, F. ; Bader, J. L. ; Pijoan, S.** Ben Slimane, published in IEEE 65th Vehicular Technology Conference. VTC-SPring, April 2007